Europäisches Patentamt

European Patent Office

Office européen des brevets

(19)

(11) **EP 1 145 512 B1**

(12) **EUROPÄISCHE PATENTSCHRIFT**

(45) Veröffentlichungstag und Bekanntmachung des Hinweises auf die Patenterteilung:
**29.09.2004 Patentblatt 2004/40**

(21) Anmeldenummer: **00900058.9**

(22) Anmeldetag: **11.01.2000**

(51) Int Cl.7: **H04L 25/02**

(86) Internationale Anmeldenummer:
**PCT/CH2000/000015**

(87) Internationale Veröffentlichungsnummer:
**WO 2000/044140 (27.07.2000 Gazette 2000/30)**

(54) **VERFAHREN UND VORRICHTUNG ZUR ABLEITUNG VON STÖRSTROMSIGNALEN IN EINER DATENÜBERTRAGUNG**

METHOD AND DEVICE FOR DATA TRANSMISSION

PROCEDE ET DISPOSITIF DE TRANSMISSION DE DONNEES

(84) Benannte Vertragsstaaten:
**AT BE CH CY DE DK ES FI FR GB GR IE IT LI LU MC NL PT SE**

(30) Priorität: **21.01.1999 CH 10999**

(43) Veröffentlichungstag der Anmeldung:
**17.10.2001 Patentblatt 2001/42**

(73) Patentinhaber: **BACAB SA**
**1450 Sainte-Croix (CH)**

(72) Erfinder:
- **VOCKENHUBER, Peter**
**CH-1424 Champagne (CH)**
- **WAGNIERES, Philippe**
**CH-1400 Yverdon les Bains (CH)**

(74) Vertreter: **Révy von Belvárd, Peter et al**
**Büchel, von Révy & Partner**
**Patentanwälte,**
**Im Zedernpark**
**Bronschhoferstrasse 31**
**9500 Wil (CH)**

(56) Entgegenhaltungen:
**EP-A- 0 447 001        WO-A-90/01245**
**WO-A-91/17633          US-A- 5 592 510**

Bemerkungen:
Derzeit sind die WIPO-Publikationsdaten A3 nicht verfügbar.

**Beschreibung**

Die vorliegende Erfindung betrifft ein Verfahren zur Datenübertragung nach dem Oberbegriff des Anspruches 1. Im besonderen betrifft die Erfindung ein Verfahren, um analoge Daten zu übertragen.

Es sind verschiedene Verfahren bekannt, um Daten zu übertragen. Meist werden analoge Signale durch Modulation einer analogen elektrischen Grösse übertragen. Die gebräuchlichsten dieser Verfahren sind die Modulation von Spannungen und Strömen eines Gleichstromsignals, oder der Frequenz oder des Tastverhältnisses eines Wechselstromsignals. So ist es gebräuchlich, Spannungen zwischen 0 und 10 Volt zu modulieren, um einen analog vorliegenden Wert mit einer elektrischen Leitung zu übertragen. Eine weitere übliche Modulationstechnik besteht darin, einen Strom zu modulieren, dessen Stromstärke zwischen 4 und 20 mA beträgt, wobei die Stromstärke dem zu übertragenden Signal proportional ist.

Weitere gängige Datenübertragungsverfahren beruhen auf der Übermittlung von Wechselströmen, wobei häufig ein analoges Signal in eine Frequenz gewandelt wird, die am empfangenden Ende ausgewertet wird. Dies geschieht mit handelsüblichen Schaltungen (VCO; Voltage Controlled Oscillator). Ein weiteres weit verbreitetes Verfahren ist die Modulation des Tastverhältnisses eines Wechselstromsignals. Die Schaltungen die dafür erhältlich sind, arbeiten nach dem unter PCM (Pulse Code Modulation) bekannten Verfahren.

Die Verfahren der Spannungs- und Stromstärkenmodulation weisen den Nachteil auf, dass es bei langen Leitungen dazu kommt, dass Störsignale, die von externen, elektromagnetischen Störern ausgesendet werden, von den Leitern empfangen werden, was die Qualität der übertragenen Daten stark beeinträchtigt. Die Modulationsverfahren hingegen, die auf einem Wechselstromsignal beruhen, sind selbst eine Quelle von elektromagnetischen Störungen, und weisen darüber hinaus den Nachteil auf, dass sie grossen Leistungsbedarf haben, da die Kapazität der Leiter andauernd umgeladen werden muss.

Es ist zwar aus der digitalen Datenübertragung bekannt, Wechselspannungssignale in Form von komplementären Signalen zu übertragen, die im Gegentakt an zwei Leitern anliegen, doch führt dies nur zu einer höheren Störsicherheit, wobei der Stromverbrauch noch höher ist, als im Falle der Modulation eines einfachen Leiters.

Eine weitere, weit verbreitete Massnahme, um die oben beschriebenen Nachteile zu überwinden, besteht darin, das Kabel zur Datenübertragung elektrisch zu schirmen, und/oder die Leiterpaare, die Gegentaktsignale übertragen, zu verdrillen. Diese beiden Massnahmen erweisen sich jedoch als teuer bei der Herstellung des Datenübertragungskabels.

Eine übertragung komplementärer Welchselspannungssignale über verdrillte Leitungen ist aus der EP-A-0 447 001 bekannt.

Der vorliegenden Erfindung liegt die Aufgabe zugrunde, die oben beschriebenen Nachteile zu überwinden. Dies gelingt mittels der kennzeichnenden Eigenschaften des Anspruches 1.

In einer ersten Näherung liegt der Erfindung die Erkenntnis zugrunde, dass die Information, die übertragen werden soll und auch die durch einen äusseren Störer induzierte Störung als Signale im Übertragungsleiter vorhanden sind, und dass man diese am Kabelkopf nur demodulieren und voneinander trennen muss, um die Information ohne Störung zu erhalten.

Dabei wird eine durch externe Signalquellen auf die Leitung aufmodulierte Störung dadurch vom Nutzsignal getrennt, dass diese im Gleichtakt auf alle parallelen Leiter gleichzeitig wirkt.

Eine weitere Massnahme gemäss der vorliegenden Erfindung betrifft die Datenübermittlung in Form von Gegentakt-Gleichstromsignalen, wodurch die Spannung, unter der die Übertragungsleiter stehen, in weiten Grenzen frei gewählt werden kann. Dadurch kann die Leiterspannung durch einen Spannungsregler auf einen festen Wert geregelt werden, und extern induzierte Störungen können durch gross dimensionierte Kondensatoren abgeleitet werden.

Weitere Einzelheiten und bevorzugte Ausführungsformen der Erfindung werden anhand der Figuren beschrieben. Es zeigen:

Fig. 1   die Übersicht eines elektrischen Schaltschemas mit dem Prinzip der Erfindung;

Fig. 2   eine bevorzugte Ausführungsform der Erfindung, die besonders unempfindlich gegenüber externen elektromagnetischen Störungen ist; und

Fig. 3   den elektrischen Aufbau für die Modulation eines Sensorsignals zur Einspeisung in Datenübertragungsleitungen gemäss der vorliegenden Erfindung.

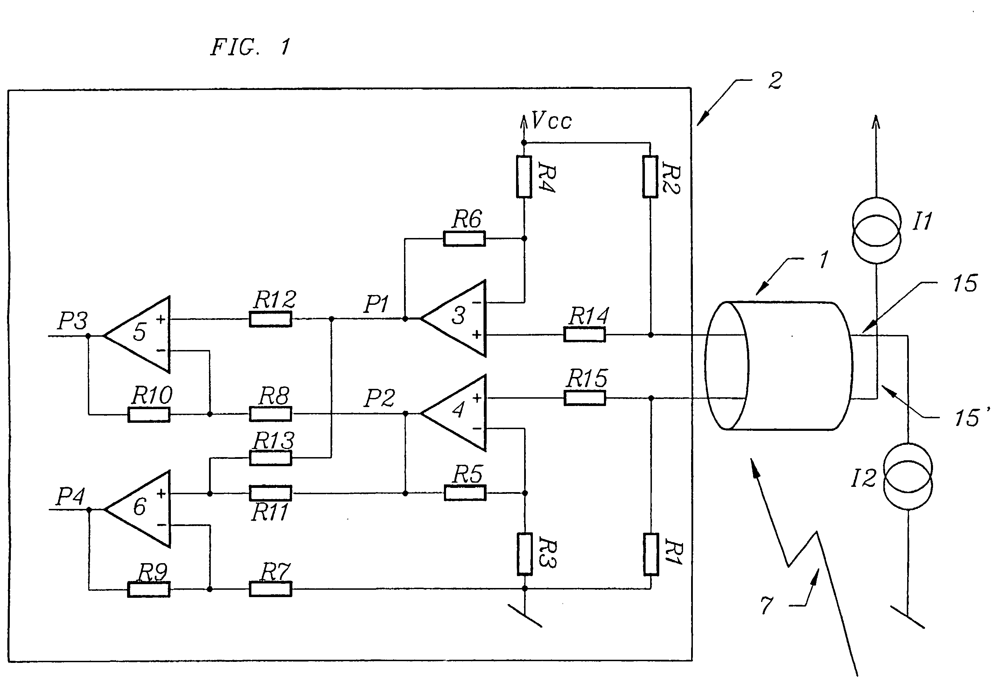

Fig. 1 zeigt eine Datenübertragungsleitung 1 für analoge Daten, die in Form von zwei Stromsignalen moduliert vorliegen. Diese werden im Beispiel der Fig. 1 in Form von zwei Stromquellen I1 und 12 dargestellt. Dabei wird angenommen, dass die Stromstärken der Ströme aus den Stromquellen I1 und 12 genau gleich gross sind, wobei einer der Ströme, namlich der der Stromquelle I1, in der Datenübertragungsleitung 1 von rechts nach links fliesst, und der zweite 12 in umgekehrter Richtung.

Nach Durchfliessen der Datenübertragungsleitung 1 kommen die Ströme in eine Auswerteeinheit 2. Dort werden sie in zwei Messwiderständen R1 und R2 in eine Spannung umgewandelt. Diese Spannung wird von je einem Operationsverstärker 3 bzw. 4 verstärkt, wodurch Signale P1 und P2 generiert werden. Vorzugsweise sind dabei die Widerstände R1 und R2, die den Verstärkunsgfaktor bestimmen, gleich gross, so dass die Signale P1 und P2 gleiche Grösse für gleich grosse Stromstärken aus den Quellen I1 und I2 haben.

Der Zusammenhang zwischen den Spannungssignalen P1 und P2 und den Stromstärken von I1 und I2 ist wie folgt gegeben:

$$P1 = Vcc - V \cdot I2$$

$$P2 = V \cdot I1$$

Dabei ist Vcc die Versorgungsspannung, die am Schema an dem mit dem Pfeil gekennzeichneten Pol anliegt, und V der Verstärkungsfaktor der beiden Operationsverstärker 3 und 4 multipliziert mit dem Messwiderstand R1 bzw. R2:

$$V = R2 \cdot R6/R4 = R1 \cdot R5/R3$$

In je einer zweiten Stufe werden die beiden Signale durch zwei weitere Operationsverstärker 5 und 6 einmal subtrahiert und ergeben ein Signal P3, und einmal addiert, wobei ein Signal P4 entsteht. Die Signalspannungen P3 und P4 hängen nun wie folgt mit den Signalen P1 und P2 einerseits und mit den Eingangsströmen I1 und I2 anderseits zusammen:

$$P3 = P1 - P2 = Vcc - V(I2 + I1)$$

$$P4 = P1 + P2 = Vcc - V(I2 - I1)$$

Diese Formeln stimmen unter der Annahme, dass die beiden Operationsverstärker 5 und 6 einen Verstärkungsfaktor von 1 haben was dadurch erreicht werden kann, dass die Bedingungen R7 = R9 und R8 = R10 erfüllt sind.

Wenn die beiden Stromstärken von I1 und I2 genau gleich gross aber von entgegengesetzter Richtung sind, reduzieren sich die beiden Gleichungen zu:

$$P3 = Vcc - 2 \cdot V \cdot I, \text{ und}$$

$$P4 = Vcc$$

Dieser Fall entspricht einer Datenübertragung ohne extern induzierte Störung.

Wenn nun eine Störung 7 von einer externen Störquelle auf Datenleitungen 15 und 15' des Datenübertragungskabels 1 aufmoduliert wird, wird in den beiden Leitern 15 und 15' jeweils ein Strom Is induziert, der die gleiche Richtung hat. Dadurch wird beispielsweise I1 um Is verringert, und I2 um Is vermehrt. Die Signale P3 und P4 ergeben sich daher dann gemäss der Formel:

$$P3 = Vcc - V(I2 + I1) \text{ bzw.}$$

$$P4 = Vcc - 2 \cdot V \cdot Is$$

Man sieht, dass das Signal P3 somit unabhängig vom Störsignal und daher auch von Gleichtaktstörungen Is ist, und dass diese direkt am Signal P4 messbar sind.

Die Messung der extern induzierten Signale gemäss P4 scheint auf den ersten Blick nicht zweckmässig, da das Signal P3 ohnehin vom Störsignal Is unabhängig ist. Dies ist jedoch nur in erster Näherung gültig, wenn es sich bei den induzierten Störströmen um Gleichtaktsignale handelt. In realen Fällen kommt es jedoch neben der Induktion von Gleichtaktsignalen immer auch zu einem gewissen Anteil an Gegentaktsignalen, die sich auf das Signal P4 nicht direkt auswirken, da sie vom Nutzsignal nicht unterschieden werden können. Als Anhilfe kann man jedoch vom Vorhandensein einer Störung gemäss Signal P4 auf das Vorliegen einer Gegentaktstörung schliessen und bei der Auswertung des Signals P3 so lange zuwarten, bis die Störung gemäss Signal P4 abgeklungen ist.

Die weitere Auswertung der Signale P3 und P4 erfolgt vorzugsweise durch Analog/Digital-Wandlung und Software in einem Computer. Dieser kann neben dem Nutzsignal auch das Störsignal als Information verarbeiten, und daher die Qualität der Datenübertragung messen.

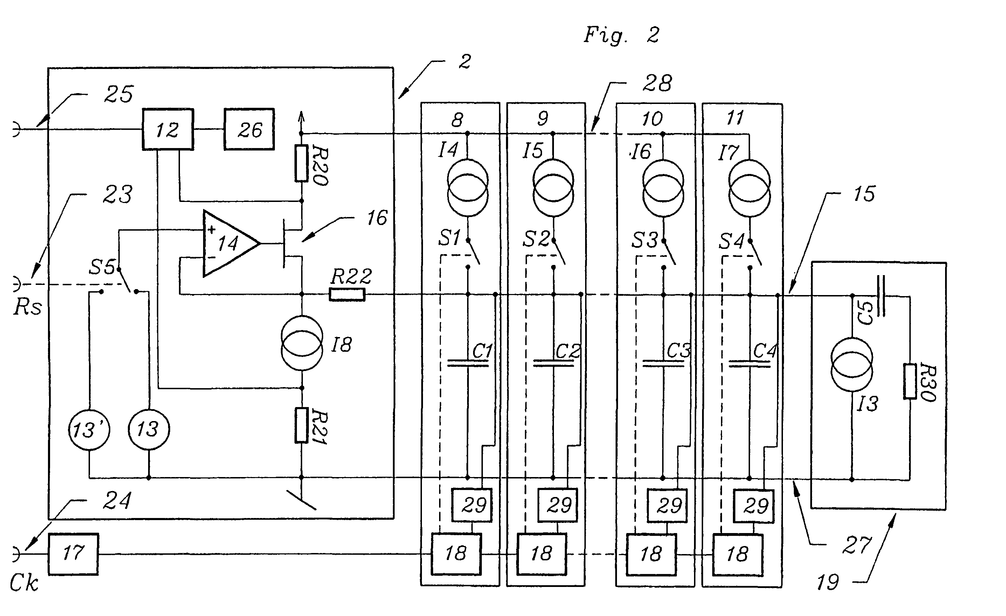

Fig. 2 zeigt eine bevorzugte Ausführungsform der vorliegenden Erfindung, die besonders unempfindlich gegenüber extern induzierten elektromagnetischen Störungen ist. Diese Unempfindlichkeit beruht auf einem möglichst grossen Widerstand der Gegentakt-Stromsignale und einem möglichst kleinen Widerstand der Gleichtakt-Stromsignale.

In einer tatsächlich realisierten Ausführungsform konnte bei Datenübertragungslängen von über 1 km Genauigkeiten der Datenübertragung von besser als 1 Promille bei Vorliegen von Störungen mit Feldstärken in der Grössenordnung von 100 V/m erreicht werden, ohne dass die Übertragungsleitung geschirmt werden musste. Da für die erfindungsgemässe Datenübertragung nur die Übertragung eines Stroms erforderlich ist, kann die Spannung, unter der der Übertragungsleiter steht, frei gewählt werden. Dies wird erfindungsgemäss dazu ausgenutzt, um diesen über einen Spannungsfolger mit einer Spannung zu versorgen, deren Impedanz der des Leiters möglichst gut angepasst ist. Dies geschieht durch eine Referenzspannungsquelle 13, die am nicht invertierenden Eingang eines Operationsverstärkers 14 anliegt, dessen Ausgang über einen Feldeffekttransistor 16 geregelt wird. Dieser Feldeffekttransistor 16 benötigt nur einen vernachlässigbar keinen Steuerstrom, so dass praktisch der gesamte Strom, der aus der Übertragungsleitung 15 gezogen wird, an einem Messwiderstand R20 abgegriffen werden kann.

Natürlich kann anstelle des Feldeffekttransistors auch ein beliebiges anderes Verstärkungselement verwendet werden, das nur einen kleinen Steuerstrom benötigt, der sich bei der Auswertung im Widerstand R20 als Fehler bemerkbar machen würde. Beispielsweise kann ein Darlington-Transistor verwendet werden.

Ein Serienwiderstand R22 sorgt vorzugsweise für die optimale Anpassung an die Kabelimpedanz des Übertragungsleiters 15.

Natürlich kann die Referenzspannung auch moduliert werden, um Information an adressierbare Schaltstellen 8 bis 11 zu übertragen, die zweckmässig Sensoren zur Abfrage anschalten, wie dies bei sog. Sensorkabeln mit in Abständen vorgesehenen und von einer Kabelkopfeinheit abgefragten Schaltstellen bzw. Sensoren der Fall ist. Die Modulation der Referenzspannung kann beispielsweise dadurch erfolgen, dass zwischen der einen Referenzspannungsquelle 13 am nicht-invertierenden Eingang des Operationsverstärkers 14 und einer zweiten, auf einen anderen Spannungswert eingestellten Referenzspannungsquelle 13' (Fig. 2) über einen Schalter S5 umgeschaltet wird. Will man auf eine Modulation aber verzichten, so genügt selbstverständlich nur eine der dargestellten Referenzspannungsquellen, z.B. 13, und der Schalter S5 könnte an sich entfallen, hat aber hier auch noch die Funktion eines Reset-Schalters.

Die Informationsübertragung durch Spannungsmodulation durch den Informationsleiter 15 ist zwar infolge von Abschirmelementen C1 bis C4 auf langsame Signale bzw. solche geringer Bandbreite beschränkt, diese können jedoch im Gesamtsystem durchaus sinnvoll sein, wenn es sich zum Beispiel um Rücksetzsignale handelt, die nur einmal nach Anlegen der Versorgungsspannung oder zyklisch nach Durchadressieren aller adressierbaren Schaltstellen 8 bis 11 ausgegeben werden müssen. Wenn ein derartiges Signal an das System abgegeben werden soll, so geschieht dies daher am Eingang 23 des Schalters S5. Dieser Eingang 23 leitet im Beispiel der Fig. 2 das System-Rücksetzsignal Rs.

Am Kabelende befindet sich zweckmässig ein Abschlusselement 19, das eine Referenzstromquelle I3, einen Kondensator C5 und einen Abschlusswiderstand R30 aufweist. Dadurch kann das Kabel für Wechselstromsignale, für die der Widerstand des Kondensators C5 vernachlässigbar klein ist, korrekt mit dem Abschlusswiderstand R30 abgeschlossen werden. Dieser korrekte Abschluss der Übertragungsleitung ist eine wirksame Störschutzmassnahme, die die zulässigen Feldstärken von externen Störern wesentlich erhöht.

Damit der Operationsverstärker 14 einen geeigneten Arbeitspunkt hat, wird ein Ruhestrom durch eine Stromquelle 18 aus seinem Ausgang gezogen.

Durch diese Anordnung wird bewirkt, dass der Übertragungsleiter 15 unter einer genau definierten, konstanten Spannung steht, und an beiden Enden impedanzmässig korrekt abgeschlossen ist. Dies ist eine wirksame Massnahme zur Erhöhung der Immunität gegenüber extern induzierten elektromagnetischen Störungen.

Der Übertragungsleiter im Beispiel der Fig. 2 ist an adressierbare Schaltstellen 8, 9, 10, 11, zweckmässig mit je einem oder mehreren, über einen adressierbaren Schalter abfragbaren Sensoren, wie Temperaturfühlern, angeschlossen, die der Reihe nach adressiert werden können. Diese können in Form eines Schieberegisters ausgeführt bzw. abfragbar sein, oder es kann sich um ein Bussystem handeln. Die adressierbaren Schaltstellen 8 bis 11 geben, wenn sie adressiert sind, jeweils ein Signal ab, dass den zugehörigen Schalter S1, S2, S3 bzw. S4 schliesst. Dadurch wird die Stromquelle I4, I5, 16, 17 der jeweiligen Schaltstelle sowohl mit dem Versorgungsleiter 28 als auch mit dem Übertragungsleiter 15 verbunden.

Die adressierbaren Schaltstellen sind derart ausgelegt, dass jeweils nur eine, die adressierte, ihren Schalter schliesst. Dadurch kann zum Beispiel ein Sensorkabel mit vielen Sensoren längs des Kabels angesteuert werden, wobei die Sensorwerte sequentiell an die Übertragungsleitung 15 geschaltet werden, um zentral, etwa von einem Kabelkopfprozessor, abgefragt und gegebenenfalls gespeichert zu werden. In diesem Falle wäre etwa die Stromstärke der Stromquellen I4 bis I7 dem Sensorwert proportional (die Stromquellen können also selbst als die Sensoren betrachtet werden), und sie wird von der Auswerteeinheit 2 ausgewertet.

Ein Adressiersignalgenerator 17 erzeugt die Ansteuersignale für die adressierbaren Schaltstellen 8, 9, 10 und 11. Natürlich können beliebig viele derartige adressierbare Schaltstellen zusammengeschaltet werden. Im Beispiel der Fig. 2 ist dies durch gestrichelte Linien zwischen den Schaltstellen 9 und 10 angedeutet. Alle adressierbaren Schaltstellen weisen einen Adressendetektor 18 auf, der das Adressiersignal vom Adressiersignalgenerator 17 detektiert und in ein entsprechendes Steuersignal für den Schalter S1 bis S4 der adressierbaren Schaltstelle umwandelt. So weist der Adressiersignalgenerator 17 im Beispiel der Fig. 2 einen Eingang 24 auf, an dem ein Systemtaktsignal Ck eingegeben wird, mit dem von jeweils einer adressierbaren Schaltstelle 8 bis 11 zur nächsten weitergeschaltet wird. Dieses Signal Ck am Eingang 24 und das Rücksetzsignal Rs am Eingang 23 bilden die Steuersignale für das Gesamtsystem, mit denen jede beliebige Schaltstelle 8 bis 11 angesteuert werden kann.

Vorzugsweise wird dabei die Steuerung derart vorgenommen, dass eine der Schaltstellen (Sensoren) 8 bis 11 dann aktiviert wird (die zugehörigen Schalter S1 bis S4 sind dann geschlossen), wenn der Eingang 24 (Signal Ck) aktiv ist, und alle Schaltstellen 8 bis 11 sind dann deaktiviert (d.h. alle Schalter S1 bis S4 sind offen), wenn das Signal Ck nicht aktiv ist. Einander folgende Signale Ck aktivieren auf diese Weise nacheinander einander folgende Schaltstellen 8 bis 11. Erst nach Erreichen der letzten Schaltstelle wird das System durch Aktivieren des Eingangs 23 (Signal Rs) wieder in seine Ausgangsstellung gebracht. Dies geschieht durch in jeder der Schaltstellen 8 bis 11 vorhandene Reset-Detektoren 29.

Da die Datenübertragung der analogen Sensorwerte durch Stromsignale erfolgt, und die Spannung des Übertragungsleiters fest eingestellt ist, kann dieser eine grosse kapazitive Last tragen, ohne dass die Übertragungsgeschwindigkeit beeinträchtigt wird. Dies ermöglicht es, die Kondensatoren C1, C2, C3 und C4 zwischen den Übertragungsleiter 15 und die Masseleitung 27 zu schalten, und dadurch die Impedanz gegenüber von aussen induzierten Spannungen sehr klein zu halten. Diese Kondensatoren C1 bis C4 können sehr grosse Werte aufweisen, ohne dass es zu Nachteilen kommt, die sich auf die Leistungsfähigkeit des Systems auswirken könnten. Natürlich können anstelle oder zusätzlich zu den Kondensatoren C1 bis C4 auch andere Ableitelemente für extern induzierte elektromagnetische Störungen geschaltet werden. So können etwa VRD-Widerstände (Voltage Dependent Resistor = spannungsabhängige Widerstände) eine gute Wirkung entfalten, wenn es sich bei den Störungen um schnell ansteigende Impulse handelt. Weitere gebräuchliche Elemente gegen induzierte Störungen sind schnelle Silizium-Dioden (Transil) oder Gasentladungsröhren (surge arrester).

Die Datenübertragung geschieht im Beispiel der Fig. 2 durch Summierung bzw. Differenzbildung von Strömen. Dabei wird von der Stromquelle I3 des Abschlusselementes 19 der Datenübertragungsleitung 15 ein konstanter Strom aus der Leitung gezogen. Dies ist vorteilhaft, da es den Arbeitspunkt des Spannungsreglers, der aus dem Operationsverstärker 14 und dem Feldeffekttransistor 16 gebildet wird, einstellt. Darüber hinaus kann der Strom des Abschlusselementes 19 gemessen werden, bevor einer der Schalter S1 bis S4 der Schaltstelle geschlossen wird, und es können Differenzwerte gebildet werden, die sich aus dem Strom vor dem Schliessen des Schalters und danach ergeben.

Der Strom aus den Stromquellen I4 bis I7, ist proportional zur übertragenen Information, und fliesst in Richtung Abschlusselement 19. Daher kann die Auswerteelektronik 12 in der Auswerteeinheit 2 durch Differenzbildung mit dem konstanten Referenzstrom von I3 geeicht werden, bevor und nachdem die variablen, dem Sensorwert proportionalen Ströme der Stromquellen I4 bis I7 gemessen werden. Die Messung erfolgt durch den Spannungsabfall am Widerstand R20. Natürlich muss vor der Auswertung noch jener Strom abgezogen werden, der durch die Stromquelle 18 zur Einstellung des Ruhestrom-Arbeitspunktes des Operationsverstärkers 14 gezogen wird. Dies geschieht durch Messung des Spannungsabfalls am Messwiderstand R21 in der Auswerteelektronik 12.

Die Auswerteelektronik 12 funktioniert vorzugsweise gemäss dem Prinzip aus Fig. 1. Dazu ist natürlich noch ein weiterer Übertragungsleiter erforderlich, der in der Fig. 2 nicht gezeichnet ist. In diesem Leiter fliessen alle Ströme in die entgegengesetzte Richtung, und die Schaltung ist daher auch entsprechend angepasst. In einer tatsächlichen Ausführungsform wären daher alle Elemente der Fig. 2 bis auf den Adressengenerator 17 und die adressierbaren Schaltstellen 8 bis 11 und deren Adressendetektor 18 doppelt vorhanden. Die Ableitelemente bzw. -kondensatoren C1 bis C4 werden dabei entsprechend gegen den Versorgungsleiter 28 geschaltet.

Die Auswerteelektronik 12 weist einen Datenausgang 25 auf, an dem ein Signal anliegt, welches dem jeweils durch den Adressiersignalgenerator 17 und den als Reset-Schalter dienenden Schalter S5 aktivierten Sensorstrom einer Schaltstelle proportional ist. Dabei kann es sich entweder um ein analoges oder ein digitales Signal handeln, wobei letzteres zweckmässig durch einen Analog/Digital-Wandler aus einem analogen, durch den Informationsleiter übermittelten Signal erzeugt wird.

Vorzugsweise wird das Signal des Informationsleiters 15 in einem Speicherelement 26 gespeichert, wobei alle Schaltstellen 8 bis 11 deaktiviert sind, d.h. auch der Eingang 24 mit dem Signal Ck deaktiviert ist. Dieses Speicherelement 26 kann für die Speicherung von analogen Daten, von aus analogen Daten am Eingang des Speicherelements 26 über einen Wandler digitalisierten Daten oder von an sich schon digital abgegebenen Daten vorgesehen sein. Daher liegt in diesem Speicherelement 26 ein Wert ab, der proportional zur Referenzstromquelle I3 des Abschlusselementes 19 ist.

Zur Erzeugung des Ausgangssignals am Ausgang 25 wird das dem Sensorstrom der jeweiligen Schaltstelle 8 bis 11 proportionale Signal zweckmässig geeicht. Dazu wird vorzugsweise die Differenz zwischen dem gespeicherten Wert bzw. dem Signalwert des Informationsleiters 15 und demjenigen Wert herangezogen, der nach der Aktivierung einer der Schaltstellen 8 bis 11 durch den Informationsleiter 15 übermittelt wird. Auf diese Weise werden alle Signale, die am Ausgang 25 des Systems bei aktivem Signal Ck am Eingang 24 anliegen, durch Differenzbildung mit der Referenzspannungsquelle 13 geeicht.

Dies stellt, wie ersichtlich, eine sehr einfache Eichungsmöglichkeit dar, und es versteht sich, dass auch kompliziertere Algorithmen für eine gewünschte Eichung herangezogen werden könnten.

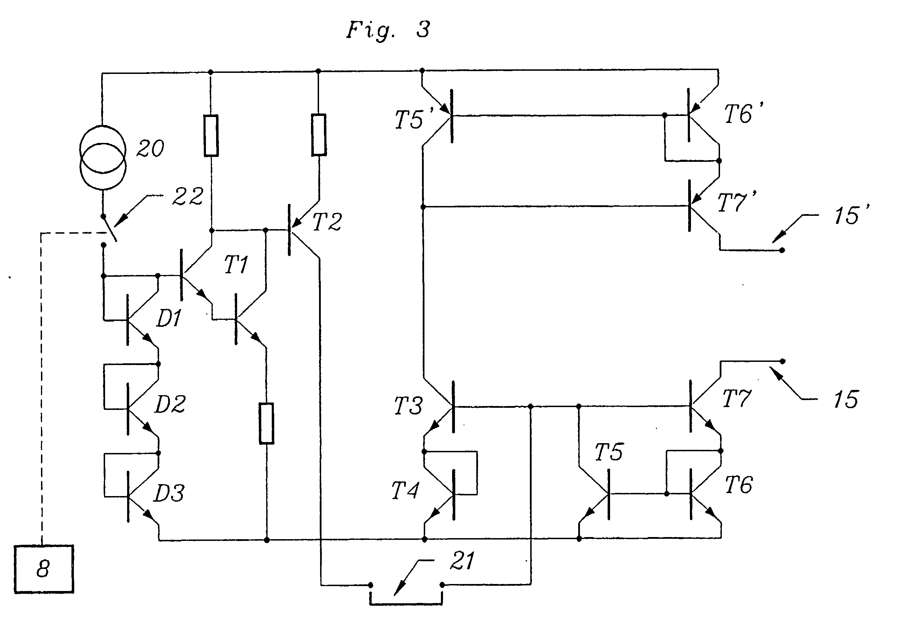

Fig. 3 zeigt ein bevorzugtes Ausführungsbeispiel einer Ankoppelschaltung an die Datenübertragungsleitungen 15 und 15' zur erfindungsgemässen Datenübertragung. Im Beispiel wird die Erzeugung eines Sensorwerts, der der Temperatur proportional ist, gezeigt. Dieser wird anschliessend in zwei Stromsignale umgewandelt, die an die Datenübertragungsleitungen 15 und 15' gemäss Fig. 1 angeschlossen werden können.

Eine Stromquelle 20 wird durch einen Schalter 22 aktiviert, der durch den Adressendetektor 18 der adressierbaren Schaltstelle 8 gesteuert wird. Dadurch sind drei Diodenschaltungen D1, D2, und D3 stromlos, wenn der Schalter offen, jedoch unter Strom, wenn der Schalter geschlossen ist. Wenn die drei Diodenschaltungen D1, D2, und D3 unter Strom stehen, entsteht im Kollektor eines Darlington-Transistors T1 ein Strom, der proportional der Temperatur ist, da die Diodenspannung einen Temperaturkoeffizienten von etwa -2mV pro Grad Kelvin hat. Alle Diodenschaltungen werden gemäss Fig. 3 vorzugsweise aus Transistoren gebildet, die als Diode geschaltet sind. Dies hat zur Folge, dass sich die Basis-Emitterspannung von Diode und Transistor auf demselben Substrat praktisch nicht unterscheiden, und dies ist für die Herstellung eines Silizium-Chips vorteilhaft.

Der, der Temperatur proportionale Kollektorstrom des Darlington-Transistors T1 wird durch einen Transistor T2 in einen Stromspiegeleingang geleitet, der von Transistoren T3 und T4 gebildet wird. Bei den Stromspiegel - Schaltungen im Beispiel der Fig. 3 handelt es sich um Schaltungen gemäss Wilson, die dem Fachmann wohlbekannt sind (z.B. U.S. Patent Nr. 3,886,435). Diese werden einmal aus NPN-Transistoren T5, T6 und T7 gebildet, und einmal aus PNP-Transistoren T5', T6' und T7'. Dieser Stromspiegel wird der Ausgangsstufe zugeleitet, die aus den Transistoren T5, T6 und T7 gebildet werden. Der Ausgangsstrom, der an dem einer Datenübertragungsleitung entsprechenden Ausgang 15 gegen Masse gezogen wird, ist daher proportional zur Temperatur. Der Ausgangsstrom aus dem Transistor T2 wird weiter zum PNP-Stromspiegel T5', T6', T7' geleitet, der einen gleich grossen Strom an den Versorgungsleiter 15' abgibt. Dieser Strom ist daher ebenfalls proportional zur Temperatur, doch weist er eine entgegengesetzte Richtung im Vergleich zum Strom durch den Übertragungsleiter 15 auf.

Zwischen der Basis des Transistors T3 und dem Kollektor des Transistors T2 liegt eine Schaltbrücke 21. Wenn die Brücke 21 geöffnet ist, kann kein Strom aus den Ausgängen gezogen werden. Hingegen kann anstelle der Temperatursonde, die aus den Diodenschaltungen D1 bis D3 und den Transistoren T1 und T2 und deren Beschaltung gebildet wird, ein anderer Sensor an den rechten Pol der Brücke angeschlossen werden, wobei der Sensor nach Schliessen eines Schalters 22 einen Strom an die Ausgangsschaltung abgibt, der proportional zum Sensorwert ist.

**Patentansprüche**

1. Verfahren zur Übertragung von Information zwischen einer Kabelkopfstation und mindestens einer Schaltstelle in Form von analogen, Signalen, die

    a) in einen Strom umgewandelt werden, dessen Stromstärke dem Signal proportional ist, wobei

    b) die Information entsprechend dem analogen Signal in Form eines Stromes über mindestens einen Informationsleiter (15) übertragen wird,

    c) der Strom gemessen und in ein dem analogen Signal proportionales Signal umgewandelt wird,

    **dadurch gekennzeichnet, dass**

    d) die Spannung des, Kabelkopfstation und Schaltstelle direkt miteinander verbindenden, Informationsleiters (15) auf einem Referenzwert gehalten wird, und

    e) von dem, Kabelkopfstation und Schaltstelle direkt miteinander verbindenden, Informationsleiter (15) jeweils die von externen Störungen induzierten Überspannungen abgeleitet werden.

2. Verfahren nach Anspruch 1, **dadurch gekennzeichnet, dass** zwei Informationsleiter (15, 15') vorgesehen sind, deren Ströme in entgegengesetzter Richtung fliessen, und dass die Nutzsignalstromstärke von der Störsignalstromstärke durch Summen- und Differenzbildung der beiden Ströme voneinander getrennt werden.

3. Verfahren nach Anspruch 1 oder 2, **dadurch gekennzeichnet, dass** der Referenzwert konstant gehalten wird.

4. Verfahren nach Anspruch 1 oder 2, **dadurch gekennzeichnet, dass** der Referenzwert verändert wird, um solche Information zu übertragen, die nur eine geringe Bandbreite erfordert.

5. Verfahren nach einem der vorhergehenden Ansprüche, **dadurch gekennzeichnet, dass** zur Erzeugung eines dem Stromsignal entsprechenden Signales eine Eichung vorgenommen wird, vorzugsweise durch Differenzbildung mit einem Referenzsignal und/oder das jeweilige Signal zwischengespeichert wird.

6. Vorrichtung mit mindestens einem Informationsleiter (15, 15') zur Übertragung von Information in Form von analogen Signalen, die von wenigstens einer mit dem Informationsleiter (15, 15') gekoppelten, über zum Auslesen von Adressensignalen mit einem Adressendetektor (18) versehenen Schaltstelle bzw. einem Sensor (8-11), insbesondere einer Reihe solcher Schaltstellen (8-11) mit je einem Schalter (S1-S4), über Stromwandler (I4-I7) abgeleitet sind, welche die analogen Signale in einen proportionalen Strom umwandeln, wobei die Stromwandler (I4-I7) über die mittels des jeweiligen Adressendetektors (18) aktivierbaren Schalter (S1-S4) mit dem Informationsleiter (15, 15') verbindbar sind, **dadurch gekennzeichnet, dass** mindestens eine Referenzspannungsquelle (13, 13') für die Spannung des Informationsleiters (15, 15') vorgesehen ist, und dass mindestens ein Ableitelement (C1-C4) zum Ableiten von durch externe Störungen induzierten Überspannungen vom Informationsleiter (15, 15') vorhanden ist

**7.** Vorrichtung nach Anspruch 6, **dadurch gekennzeichnet, dass** zwei Informationsleiter (15, 15') vorgesehen sind, und dass deren in einander entgegengesetzter Richtung fliessenden Ströme mittels eines Summen- und eines Differenzbildners (5 bzw. 6) zur Abtrennung von Störstromsignalen verarbeitbar sind.

**8.** Vorrichtung nach Anspruch 6 oder 7, **dadurch gekennzeichnet, dass** der Referenzspannungsquelle (13) ein Spannungsregler (14, 16, R20-R22) zum Konstanthalten der Spannung zugeordnet ist, der vorzugsweise einen Operationsverstärker (14) aufweist, an dessen Ausgang ein Verstärkungselement (16), insbesondere mit geringem Eingangsstrom, wie ein Feldeffekt-Transistor, angeschlossen ist, sowie insbesondere in der Auswerteeinheit ein Impedanzglied (R22) vorgesehen ist, das die Ausgangsimpedanz des Spannungsreglers an den Wellenwiderstand des Informationsleiters (15) optimal anpasst, wobei dieses Impedanzglied auch eine aktive bzw. nichtlineare Impedanz sein kann, und gegebenenfalls eine Stromquelle (18) zum Festlegen des Ruhestromes des Arbeitspunkts der Ausgangsstufe des Spannungsreglers vorgesehen ist, wobei bevorzugt das Stromsignal für den Ruhestrom mittels eines Strom/Spannungs-Wandlers (R21) vom Nutzsignal, das am Strom/Spannungs-Wandler (R20) abfällt, von einer Auswerteelektronik (12) abziehbar ist

**9.** Vorrichtung nach Anspruch 6, 7 oder 8, **dadurch gekennzeichnet, dass** eine Modulationseinrichtung (13', S5) für die Spannung des Informationsleiters (15, 15') vorgesehen ist, die vorzugsweise eine weitere Referenzspannungsquelle (13' bzw. 13) aufweist, die über einen Schalter (S5) anschaltbar ist

**10.** Vorrichtung nach einem der Ansprüche 6 bis 9, **dadurch gekennzeichnet, dass** eine Eicheinrichtung für das jeweils abgegebene Ausgangssignal vorgesehen ist, und dass diese Eicheinrichtung vorzugsweise einen Differenzbildner (12) für die Signalspannung mit der Referenzspannungsquelle (I3) aufweist, und insbesondere ein Abschlusselement (19) vorgesehen ist, das eine Stromquelle (13) aufweist, deren Signal in der Auswerteeinheit zum Eichen der Auswertelektronik verwendet wird, wenn keiner der Schalter (S1-S4) der adressierbaren Schaltstellen (8-11) geschlossen ist, wobei das Nutzsignal, das ausgewertet wird, durch eine Differenzbildung zwischen dem Stromsignal der Stromquelle (13) des Abschlusselements (19) und dem Strom gebildet wird, der fliesst, wenn einer der Schalter (S1-S4) geschlossen ist, wobei vorzugsweise der Strom des Abschlusselements (19) grösser ist als der grösste Strom, den eine der Stromquellen (I4-I7) abgeben kann, wobei insbesondere im Abschlusselement (19) ein Impedanzglied (C5, R30) vorgesehen ist, das an den Wellenwiderstand des Informationsleiters (15) optimal anpasst, wobei dieses Impedanzglied auch eine aktive bzw. nichtlineare Impedanz sein kann.

**11.** Vorrichtung nach einem der Ansprüche 6 bis 10, **dadurch gekennzeichnet, dass** bei der adressierbaren Schaltstelle ein Stromeingang über eine Schaltbrücke (21) mit verschiedenen Sensoren (8-11) verbindbar ist, die dem Messwert proportionale Stromsignale abgeben, wobei ein Pol der Brücke (21) an zwei komplementäre Stromspiegel (T5, T6,T7, T5', T6',T7') angeschlossen ist, die den Eingangsstrom in die Brücke (21) in zwei Ströme umsetzen, die die gleiche Stromstärke aufweisen, jedoch in entgegengesetzter Richtung fliessen.

## Claims

**1.** A process for the transmission of information between a cable header station and at least one switching station, in the form of analogue signals which

a) are converted into a current, the current strength of which is proportional to the signal, wherein
b) the information corresponding to the analogue signal is transmitted in the form of a current via at least one information line (15),
c) the current is measured and is converted into a signal proportional to the analogue signal,
**characterised in that**
d) the voltage of the information line (15), which directly connects the cable header station and the switching station to each other, is maintained at a reference value, and
e) the overvoltages which are induced by external interferences are derived from the information line (15) which directly connects the cable header station and the switching station to each other.

**2.** A process according to claim 1, **characterised in that** two information lines (15, 15') are provided, the currents of which flow in opposite directions, and that the wanted signal current strength is separated from the interference signal current strength by forming the sum and difference of the two currents from each other.

**3.** A process according to claim 1 or 2, **characterised in that** the reference value is held constant.

**4.** A process according to claim 1 or 2, **characterised in that** the reference value is varied in order to transmit information which only requires a small bandwidth.

**5.** A process according to any one of the preceding claims, **characterised in that** in order to generate a signal corresponding to the current signal a calibration is performed, preferably by difference formation in relation to a reference signal, and/or the respective signal is temporarily stored.

**6.** An apparatus comprising at least one information line (15, 15') for the transmission of information in the form of analogue signals which are derived from at least one switching station or a sensor (8-11) which is coupled to the information line (15, 15') and which is provided with an address detector (18) for the read-out of address signals, particularly from a row of such switching stations which each comprise a switch (14-17), via current converters (14-17) which convert the analogue signals into a proportional current, wherein the current converters (14-17) can be connected to the information line (15, 15') via the switches (S1-S4), which are operated by means of the respective address detector (18), **characterised in that** at least one reference voltage source (13, 13') is provided for the voltage of the information line (15, 15'), and that at least one derivation element (C1-C4) is present for the derivation of overvoltages, which are induced by external interferences, from the information line (15, 15').

**7.** An apparatus according to claim 6, **characterised in that** two information lines (15, 15') are provided, and the currents thereof, which flow in mutually opposite directions, can be processed by means of a sum former and a difference former (5; 6) for the separation of interference current signals.

**8.** An apparatus according to claim 6 or 7, **characterised in that** a voltage regulator (14, 16, R20-R22) for holding the voltage constant is associated with the reference voltage source (13), and preferably comprises an operational amplifier (14), to the output of which an amplification element (16) is connected, particularly one with a low input current such as a field effect transistor, and an impedance element (R22) is provided in the evaluation unit in particular and matches the output impedance of the voltage regulator to the wave resistance of the information line (15) in the optimum manner, wherein said impedance element can also be an active or nonlinear impedance, and a current source (18) is optionally provided for determining the quiescent current of the operating point of the output stage of the voltage regulator, wherein the current signal for the quiescent current can preferably be taken off by an evaluation electronics unit (12), by means of a current/voltage converter (R20), from the wanted signal which is released at the current/voltage converter (R20).

**9.** An apparatus according to claim 6, 7 or 8, **characterised in that** a modulation unit (13', SS) is provided for the voltage of the information line (15, 15'), and preferably comprises a further reference voltage source (13'; 13) which can be connected via a switch (S5).

**10.** An apparatus according to any one of claims 6 to 9, **characterised in that** a calibration device is provided for the output signal which is emitted each time, and that said calibration device preferably comprises a difference former (12) for the signal voltage in relation to the reference voltage source (13), and in particular a closing element (19) is provided which comprises a current source (13), the signal of which is used in the evaluation unit for calibrating the evaluation electronics unit if none of the switches (S1-S4) of the addressable switching stations (8-11) is closed, wherein the wanted signal which is evaluated is formed by forming the difference between the current signal of the current source (13) of the closing element (19) and the current which flows if one of the switches (S1-S4) is closed, wherein the current of the closing element (19) is preferably higher than the highest current which one of the current sources (14-17) can supply, wherein an impedance element (C5, R30) is provided in the closing element (19) in particular, and is matched in the optimum manner to the wave resistance of the information line (15), wherein said impedance element can also be an active or nonlinear impedance.

**11.** An apparatus according to any one of claims 6 to 10, **characterised in** the addressable switching station a current input can be connected via a switching bridge (21) to different sensors (8-11) which emit current signals proportional to the measured value, wherein one terminal of the bridge (21) is connected to complementary current level circuits (T5, T6, T7, T5', T6', T7') which convert the input current in the bridge (21) into two currents which have the same current strength but which flow in opposite directions.

**Revendications**

1. Procédé de transmission d'information, entre une station de tête de câble et au moins un poste de commutation, sous la forme de signaux analogiques, qui

   a) sont convertis en un courant dont l'intensité de courant est proportionnelle au signal, et
   b) l'information est transmise de manière correspondante au signal analogique, sous la forme d'un courant sur au moins un guide d'information (15),
   c) le courant est mesuré et converti en un signal proportionnel au signal analogique, **caractérisé en ce que**
   d) la tension du guide d'information (15), reliant directement ensemble le poste de tête de câble et le poste de commutation, est maintenue à une valeur de référence, et
   e) du guide d'information (15), reliant directement ensemble le poste de tête de câble et le poste de commutation, sont chaque fois dérivées les surtensions induites par des perturbations ou parasites externes.

2. Procédé selon la revendication 1, **caractérisé en ce que** qui deux guides d'information (15, 15') sont prévus, dont les courants s'écoulent en direction opposée, et **en ce que** l'intensité de courant de signal utile et l'intensité de courant de signal parasite sont séparées l'une de l'autre, par formation de somme et de différence entre les deux courants.

3. Procédé selon la revendication 1 ou 2, **caractérisé en ce que** la valeur de référence est maintenue constante.

4. Procédé selon la revendication 1 ou 2, **caractérisé en ce que** la valeur de référence est modifiée pour transmettre une telle information, ne demandant qu'une faible largeur de bande.

5. Procédé selon l'une des revendications précédentes, **caractérisé en ce que**, pour produire un signal correspondant au signal de courant, on effectue un étalonnage, de préférence, par formation de différence avec un signal de référence et/ou on met en mémoire intermédiaire le signal respectif.

6. Dispositif comprenant au moins un guide d'information (15, 15'), pour transmission d'une information sous la forme de signaux analogiques, dérivés d'au moins un point de commutation, couplé au guide de formation (15, 15') ou muni d'un détecteur d'adresse (18) pour la lecture de signaux d'adresses, respectivement dérivés d'un capteur (8 à 11), en particulier d'une série de tels points de commutation (8 à 11), comprenant chacun un interrupteur (S1 à S4), la dérivation se faisant par des convertisseurs de courant (14 à 17) qui convertissent les signaux analogiques en un courant proportionnel, les convertisseurs de courant (14 à 17) étant susceptible d'être reliés au guide de formation (15, 15'), par l'intermédiaire des interrupteurs (S1 à S4), activables au moyen du détecteur d'adresses (18) spécifique, **caractérisé en ce qu'**au moins une source de tension de référence (13, 13') pour la tension du guide d'information (15, 15') est prévue, et **en ce qu'**au moins un élément de dérivation (C1-C4) est prévu pour dériver du guide d'information (15, 15') des surtensions ayant été induites par des perturbations ou parasites externes.

7. Dispositif selon la revendication 6, **caractérisé en ce que** deux guides d'information (15, 15') sont prévus, et **en ce que** leurs courants, s'écoulant en direction opposée, sont susceptibles d'être traités à l'aide d'un formateur de somme et de différence (5, respectivement 6), afin de séparer les signaux de courant parasites.

8. Dispositif selon la revendication 6 ou 7, **caractérisé en ce qu'**à la source de tension de référence (13) est associé un régulateur de tension (14, 16, R20 à R22), pour maintenir constante la tension, régulateur présentant, de préférence, un amplificateur opérationnel (14), à la sortie duquel est raccordé un élément d'amplification (16), en particulier à faible courant d'entrée, tel qu'un transistor à effet de champ, ainsi qu'en particulier est prévu dans l'unité d'évaluation un organe d'impédance (R22), qui adapte de façon optimale l'impédance de sortie du régulateur de tension à la résistance d'ondes ou impédance du guide d'information (15), sachant que cet organe à impédance peut également être une impédance active ou non-linéaire et, le cas échéant, une source de courant (18), pour fixer le courant de repos du point de travail de l'étage de sortie du régulateur de tension, est prévue, sachant que, de préférence, le signal de courant, pour le courant de repos, peut être extrait par une électronique d'évaluation (12) à l'aide d'un convertisseur intensité/tension (R21), depuis le signal utile, qui chute au convertisseur à intensité/tension (R20).

9. Dispositif selon la revendication 6, 7 ou 8, **caractérisé en ce qu'**un dispositif de modulation (13', 85), pour la tension du conducteur d'information (15, 15') est prévu, qui, de préférence, présente une autre source de tension de référence (13', respectivement 13), pouvant être branchée par un interrupteur (S5).

10. Dispositif selon l'une des revendications 6 à 9, **caractérisé en ce qu'**un dispositif d'étalonnage est prévu, pour le signal de sortie chaque fois prélevé, et **en ce que** ce dispositif d'étalonnage présente, de préférence, un formateur de différence (12) pour la tension de signal, avec la source de tension de référence (13) et, en particulier, est prévu un élément de terminaison (19), qui présente une source de courant (13) dont le signal est utilisé dans l'unité d'évaluation pour l'étalonnage de l'électronique d'évaluation, lorsqu'aucun des interrupteurs (S1 à S4) des points de commutation (8 à 11) adressables n'est fermé, sachant que le signal utile, qui est évalué, est formé par formation de différence entre le signal de courant de la source de courant (13) des éléments de raccordement (19) et le courant qui passe, lorsque l'un des interrupteurs (S1 à S4) est fermé, sachant que, de préférence, le courant de l'élément de terminaison (16) est supérieur au courant maximal qui peut être dérivé d'une des sources de courant (14 à 17), sachant que, en particulier, dans l'élément de terminaison (19) est prévu un organe à impédance (C5, R30), qui adapte de façon optimale à l'impédance du guide d'ondes (15), sachant que cet organe à impédance peut également être une impédance active, respectivement non-linéaire.

11. Dispositif selon l'une des revendications 6 à 10, **caractérisé en ce que**, dans le cas du point de commutation adressable, une entrée de courant peut être reliée par un pont de commutation (21), à différents capteurs (8 à 11), délivrant des signaux électriques proportionnels à la valeur de mesure, sachant qu'un pôle du pont (21) est raccordé à deux miroirs de courant (T5, T6, T7, T5', T6', T7') complémentaires, qui convertissent le courant d'entrée dans le pont (21) en deux courants, qui présentent la même intensité de courant, mais cependant orientée en sens opposé.

*FIG. 1*

Fig. 2

Fig. 3

EP 1 145 512 B1